Europäisches Patentamt

European Patent Office

Office européen des brevets

(11) Veröffentlichungsnummer: **0 320 603 B1**

# (12) EUROPÄISCHE PATENTSCHRIFT

(45) Veröffentlichungstag der Patentschrift: **03.06.92**

(21) Anmeldenummer: **88117625.9**

(22) Anmeldetag: **22.10.88**

(51) Int. Cl.⁵: **C09C 1/26**

(54) **Eisenblau-Pigment, Verfahren zu seiner Herstellung und Verwendung.**

(30) Priorität: **16.12.87 DE 3742628**

(43) Veröffentlichungstag der Anmeldung:
**21.06.89 Patentblatt 89/25**

(45) Bekanntmachung des Hinweises auf die
Patenterteilung:
**03.06.92 Patentblatt 92/23**

(84) Benannte Vertragsstaaten:
**BE DE ES FR GB IT NL**

(56) Entgegenhaltungen:
**EP-A- 0 049 747**

**Kirk-Othmer, vol. 17 (1982) 827 Ullmanns,
Band 18 (1979) 623-626**

(73) Patentinhaber: **Degussa Aktiengesellschaft
Weissfrauenstrasse 9
W-6000 Frankfurt am Main 1(DE)**

(72) Erfinder: **Gratzfeld, Everhard
Kleiststrasse 8
W-5047 Wesseling(DE)**
Erfinder: **Clausen, Eva
Gartenstrasse 43
W-5000 Köln 50(DE)**
Erfinder: **Winkeler, Heinrich
Alemannenweg 13
W-5047 Wesseling(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Eisenblau-Pigment, das Verfahren zu seiner Herstellung und seine Verwendung.

Eisenblau-Pigment (DIN 55 906) ist bekannt unter der Bezeichnung Berliner-, Pariser-, Preussisch-, Milori-, Stahl-, Ferrocyan- und Bronzeblau. In der angelsächsischen Literatur wird Eisenblau-Pigment auch als iron blue bezeichnet (Ullmann's Enzyklopädie der technischen Chemie, 4. Auflage, 18. Band, Seite 623 ff.).

Eisenblau-Pigment wird in der Druck- und Lackfarbenindustrie und für die Anfärbung von Fungiziden wegen seiner hohen Farbintensität und seines gegenüber organischen Pigmenten geringen Preises geschätzt.

Eisenblau-Pigment ist ein Alkaliferriferrocyanid der allgemeinen Formel Me(I)Fe(III) Fe(II) (CN)$_6$ . H$_2$O, wobei Me(I) = einwertiges Alkalimetallion ist.

Die Herstellung von Eisenblau-Pigmenten erfolgt durch Fällung aus Hexacyanoferrat (II)-Lösungen und Eisen(II)salz-Lösungen über den sogenannten Weißteig oder Berliner Weiß der allgemeinen Formel

Me(I)$_2$Fe(II) Fe(II) (CN)$_6$ . H$_2$O,

der gegebenenfalls unter Zusatz von Alkalimetallsalzen nach einer Wärmebehandlung (Alterung) oxidiert wird.

Farbtechnischen Charakter und damit praktische Bedeutung für die pigmentverarbeitende Industrie haben nur solche Eisenblau-Pigment-Verbindungen, die als Alkalimetall überwiegend Kalium und/oder Ammoniumionen im Molekül enthalten.

Aus der DE-OS 30 38 285 ist ein Eisenblau-Pigment bekannt, welches durch einen Gehalt an Kalium von 7,0 bis 9,0 Gew.-%, vorzugsweise 7,6 bis 9,0 Gew.-%, einen Gehalt an Natrium von 0,5 bis 2,0 Gew.-%, vorzugsweise 0,5 bis 1,5 Gew.-%, gekennzeichnet ist.

Das bekannte Eisenblau-Pigment ist identisch mit VOSSEN-Blau 705/80. Damit hergestellte Tiefdruckfarben sind bis zu 15 % farbschwächer und enthalten keinen Rohanteil.

Es ist bekannt, daß Art und Menge der im Berlinerblaugitter stehenden Alkalimetalle nicht nur für Farbstärke und Farbtiefe Ursache sind, sondern auch den Farbton beeinflussen. Besonders gemeint ist der in lasierenden Schichten sichtbar werdende Unterton. Die Farbe der im Berlinerblau vorhandenen Alkalimetalle entspricht offensichtlich der ihrer Spektrallinien der Flammenfärbung. Als Alkalimetalle bei der Blauherstellung im Großen kommen Natrium, Kalium und Ammonium in Frage. Natrium hat gelbe, Kalium violette und Ammonium stark violette Spektrallinien.

Bekannte rotstichige Blaupigmente werden mit der allgemeinen Bezeichnung Toningblau hergestellt. Der rote Farbton wird durch eine NH$_3$-Adsorbtion an der Pigmentoberfläche erzielt. NH$_3$ entsteht bei der Weißteigoxidation im alkalischen Bereich aus in der Suspension vorhandenem Ammoniumsalz.

Die Oxidation erfolgt mit Natriumbichromat. Chrom bleibt als Cr(OH)$_3$ mit dem ebenfalls ausgefallenen Fe (OH)$_2$ (Fe(OH)$_3$) als störende Verbindung im Pigment zurück. Der große Nachteil dieser Toningblausorten besteht darin, daß NH$_3$ schon durch geringe Säurekonzentrationen im Pigmentbindemittel von der Pigmentoberfläche gelöst wird. Auch durch thermische Einflüsse wird NH$_3$ verdrängt. Damit verschwindet sofort der Rotanteil des Pigmentes. Wegen seiner Instabilität wird dieses Farbmittel nicht mehr hergestellt.

Gegenstand der Erfindung ist ein Eisenblau-Pigment, gekennzeichnet durch einen Gehalt an Ammonium von ≥ 5,5 Gew.-%, an Kalium von 0,1 Gew.-%, an Natrium von <0,1 Gew.-%, eine Farbkraft in einer Toluoltiefdruckfarbe bis 15 % über dem Standard Vossenblau 705/80 (berechnet nach DIN 53234) und die Farbabstände (bestimmt nach DIN 6174, bezogen auf Vossenblau 705/80 als Standard) von

| | |
|---|---|
| Δa* | 6,5 ± 0,5 |
| Δb* | 1,3 ± 0,3 |
| Δc* | -1,5 ± 0,5 |

Das erfindungsgemäße Eisenblau-Pigment kann einen Trocknungsverlust (Restwassergehalt) von ca. 3,5 Gew.-% (ermittelt nach DIN 53 198) und einen CN-Gehalt von ca. 49 Gew.-% (ermittelt nach der Methode Feld) aufweisen.

Ein weiterer Gegenstand der Erfindung ist das Verfahren zur Herstellung des erfindungsgemäßen Eisenblau-Pigmentes, welches dadurch gekennzeichnet ist, daß man eine wässrige Lösung von Natriumhexacyanoferrat II in einem Reaktionsgefäß mit einem pH-Wert von 7,0 einer Konzentration von 45 ± 5 g/l, gerechnet als Fe(CN)$_6$, zusammen mit Ammoniumsulfat einer Konzentration von 14 ± 1 g / l bei einer Temperatur von 22 bis 23 °C vorlegt, eine wässrige Eisen-II-Sulfat-Lösung mit einem pH-Wert von 2,0, einer Konzentration von 100 ± 10 g/l und einer Temperatur von 22 - 23 °C hinzufügt und den Weißteig bis zu einem Eisenüberschuß von 1,4 - 1,7 g/l gerechnet als Fe im Filtrat ausfällt, anschließend den Weißteig durch Dekantieren so weit auswäscht, bis das Filtrat eine Leitfähigkeit von 5000 bis 5500 µS anzeigt und einen Eisenüberschuß von 0,1 - 0,2 g/l Fe aufweist, anschließend 58 ± 6 g Ammoniumsulfat einrührt und den Weißteig über einen Zeitraum von ≧ 2 Stunden kocht und danach bei einer Temperatur von 70 ± 5 °C zuerst ≧ 90 g HCl als eine 10 bis 15 %ige wässrige Lösung und anschließend ≧ 51 g Natriumchlorat als wässrige Lösung mit einer Konzentration von 270 ± 30 g/l hinzugibt.

Die Daten der erfindungsgemäßen Herstellung des erfindungsgemäßen Eisenblau-Pigmentes unterscheiden sich scheinbar wenig von den bekannten Methoden. Es gibt aber bei der Darstellung des erfindungsgemäßen Pigmentes eine entscheidende Abweichung. Der aus Natriumferrocyanid gefällte Berlinerweißteig wird durch Dekantieren weitgehend salzfrei gewaschen.

Diese Salzfreiheit ist Voraussetzung für den vollständigen Austausch von Natrium durch Ammonium im Berlinerweißmolekül.

Die Analysewerte des erfindungsgemäßen Eisenblau-Pigmentes sind ungewöhnlich und vorteilhaft. Hohe Gehalte an Cyanid, Eisen und Ammonium bei gleichzeitig niedrigem Gehalt an Natrium verursachen hohe Farbkraft und einen schönen Violett-Farbton.

Die analytischen Werte entsprechen der Zusammensetzung des Berlinerblaugitters. Es gelang erstmalig diesen Idealzustand zu erreichen.

Die wertvollste Eigenschaft des neuen Pigmentes für die Anwendung ist der rotstichige Farbton. Ein solches Pigment wird für Abtönzwecke, besonders im Tiefdruck, seit Jahren gesucht. Aber auch zur Herstellung von Metall- und Autolacken sind interessante Anwendungsmöglichkeiten zu erwarten.

Das erfindungsgemäße Verfahren wird anhand des folgenden Beispieles näher erläutert und beschrieben:

Die Prüfung der Eisenblaupigmente erfolgt in einer Toluoltiefdruckfarbe folgender Endzusammensetzung:

| | |
|---|---|
| 15,15 Gew.-% | Pigment |
| 26,65 Gew.-% | Harz |
| 58,20 Gew.-% | Lösungsmittel |

Die Dispergierung wird mit Hilfe der Schüttelmaschine nach DIN 53238, Teil 10 vorgenommen. Die erhaltenen Druckfarben werden auf Druckträger mit einem Flachandrückgerät gedrückt. Die Abmusterung erfolgt an einem Druckfeld, stammend von 20 µm Napfentiefe der Druckplatte, nach DIN 6174.

Beispiel

Vorlage: Na$_4$(Fe(CN)$_6$) . 10 H$_2$O in Wasser gelöst = 372 g (Fe(CN)$_6$) + 116 g (NH$_4$)$_2$ SO$_4$
Konzentration 45 g/l (Fe(CN)$_6$)
pH-Wert ca. 7,0
Temperatur 22 - 23 °C

Fällösung: ca. 740 g FeSO$_4$ . 7 H$_2$O in Wasser gelöst Konzentration 100 g/l
pH-Wert 2,0
Temperatur 22 - 23 °C

Fällzeit: 1 Stunde

Der Weißteig wird ausgefällt bis zu einem Eisenüberschuß 6,5 - 7,5 (Verbrauchte ml KMnO$_4$-Lsg. 0,02 mol/l für 25 ml Filtrat). Dies entspricht einem Fe-Gehalt von 1,4 bis 1,7 g / .

Weißteigflockung: 1350 ml Sedipur NF 102-Lösung 0,05 %ig in Wasser = 0,12 % Sedipur NF 102 auf Pigment berechnet.
Sedipur$^R$ NT̄ 102 ist ein nichtionogenes Flockungsmittel aus Polyacrylamid (Hersteller BASF)

Weißteig-Waschen: Der Weißteig wird auf 18 Liter mit Wasser verdünnt, nach dem Sedimentieren 50 % überstehende Salzlösung abgezogen und wieder auf 18 Liter verdünnt. Das Dekantieren des Weißteiges wird insgesamt viermal durchgeführt.

Nach dem Dekantieren zeigt das Filtrat eine Leitfähigkeit von 5000 - 5500 µS und einen Eisenüberschuß von 0,5 - 1,0.

Ammonsulfat-Zugabe: Nach dem Abziehen des letzten Waschwassers wird mit 58 g (NH$_4$)$_2$SO$_4$ 30

|                      | Minuten gerührt |
|----------------------|-----------------|
| Weißteig-Kochung:    | 2 Stunden       |
| Oxidation:           | Bei 70 °C werden 90 g HCl als 10 - 15 %ige wässrige Lösung zugegeben, 5 Minuten gerührt, anschließend 51 g NaClO$_3$ als wässrige Lösung ca. 270 g/l hinzugegeben. |

Das erhaltene Blaupigment wird in den Tabellen 1 und 2 mit bekannten Blaupigmenten verglichen.

Das erfindungsgemäße Blaupigment zeigt die folgenden vorteilhaften Eigenschaften:

- hohe Farbkraft
- außergewöhnlich hohen Rotanteil, gekennzeichnet durch die große positive Differenz von a* im Vergleich zu den als Bezug aufgeführten bekannten Eisenblaupigmenten.

4

Tabelle 1

Chemisch-analytische Prüfung

| Bezeichnung | Vossen Blau 705/80 | Daicolor 690 | Manox Blue 155 | Manox Blue 298 | Milori Blue x 3434 | Beispiel 1 |
|---|---|---|---|---|---|---|
| Hersteller | Degussa | Dainishi Seika | Manox Ltd. | Manox Ltd. | CIBA Geigy | Degussa |
| Trocknungsverlust (%) | 4,0 | 2,1 | 2,3 | 4,8 | 3,5 | 2,6 |
| $Fe((CN)_6)^{4-}$ (%) | 61,3 | 63,9 | 60,9 | 60,8 | 60,4 | 66,4 |
| Fe außerkompl. (%) | 18,4 | 17,8 | 17,2 | 18,8 | 17,4 | 19,3 |
| K (%) | 8,7 | nicht nachweisbar | 0,5 | nicht nachweisbar | nicht nachweisbar | Spuren |
| Na (%) | 1,3 | 1,4 | 1,9 | 1,13 | 1,0 | $< 0,1$ |
| $NH_4$ (%) | 0,5 | 4,3 | 3,5 | 3,60 | 4,0 | 5,49 |
| DBA-Adsorption (mg-Äquival./kg) | 130 | 82 | ** | 118 | ** | 86 |

EP 0 320 603 B1

**Tabelle 2**

Anwendungstechnische Prüfung: Disergierung Schüttelmaschine nach DIN 53 238, Teil 10

Toluol-Tiefdruck    Andrucke 65 g/m²

| Bezeichnung | Vossen-Blau 705/80 | Daicolor 690 | Manox Blue 155 | Manox Blue 298 | Miloriblue x 3434 | Beispiel 1 |
|---|---|---|---|---|---|---|
| Hersteller | Degussa | Dainishi Seika | Manox Ltd. | Manox Ltd. | Ciba Geigy | Degussa |
| Farbkraft (%) | 100 | 85 | 78 | 94 | 101 | 115 |
| Farbwerte: | | | | | | |
| a* | Bezug | – 2,1 | – 5,9 | – 1,3 | – 2,1 | 6,8 |
| b* | Bezug | 3,3 | 4,5 | 3,3 | 1,4 | 1,3 |
| c* | Bezug | – 3,5 | – 4,6 | – 3,4 | – 1,6 | – 1,5 |

**Patentansprüche**

1. Eisenblaupigment, gekennzeichnet durch einen Gehalt an Ammonium von ≧ 5,5 Gew.-%, an Kalium von <0,1 Gew.-%, an Natrium von < 0,1 Gew.-%, eine Farbkraft in einer Toluoltiefdruckfarbe bis 15 % über dem Standard Vossenblau 705/80 (berechnet nach DIN 53 234) und die Farbabstände (bestimmt nach DIN 6174, bezogen auf Vossenblau 705/80 als Standard) von

| | |
|---|---|
| $\Delta a^*$ | 6,5 ± 0,5 |
| $\Delta b^*$ | 1,3 ± 0,3 |
| $\Delta c^*$ | -1,5 ± 0,5 |

2. Verfahren zur Herstellung des Eisenblau-Pigmentes nach Anspruch 1, dadurch gekennzeichnet, daß man eine Lösung von Natriumhexacyanoferrat (II) in einem Reaktionsgefäß mit einem pH-Wert von 7,0 einer Konzentration von 45 ± 5 g/l, gerechnet als $Fe(CN)_6$ zusammen mit Ammoniumsulfat einer Konzentration von 14 ± 1 g/l bei einer Temperatur von 22 bis 23 °C vorlegt, eine wässrige Eisen-II-Sulfat-Lösung mit einem pH-Wert von 2,0, einer Konzentration 100 ± 10 g / l und einer Temperatur von 22 - 23 °C hinzufügt und den Weißteig bis zu einem Eisenüberschuß von 1,4 - 1,7 g / l, gerechnet als Fe im Filtrat, ausfällt, anschließend den Weißteig durch Dekantieren soweit auswäscht, bis das Filtrat eine Leitfähigkeit von 5000 bis 5500 μS anzeigt und einen Eisenüberschuß von 0,1 - 0,2 g / l, gerechnet als Fe im Filtrat, aufweist, anschließend 58 ± 6 g Ammoniumsulfat einrührt und den Weißteig über einen Zeitraum von ≥ 2 Stunden kocht und danach bei einer Temperatur von 70 ± 5 °C zuerst ≥ 90 g HCl als eine 10 bis 15 %ige wässrige Lösung und anschließend ≥ 51 g Natriumchlorat als wässrige Lösung mit einer Konzentration von 270 ± 30 g/l hinzugibt.

**Claims**

1. An iron blue pigment, characterized by an ammonium content of ≥ 5.5% by weight, a potassium content of < 0.1% by weight, a sodium content of < 0.1% by weight, a colouring strength in a toluene gravure printing ink of up to 15% above the standard Vossenblau 705/80 (as calculated in accordance with DIN 53 234) and the following colour intervals (as determined in accordance with DIN 6174, based on Vossenblau 705/80 as standard):

| | |
|---|---|
| $\Delta a^*$ | 6.5 ± 0.5 |
| $\Delta b^*$ | 1.3 ± 0.3 |
| $\Delta c^*$ | -1.5 ± 0.5 |

2. A process for the production of the iron blue pigment claimed in claim 1, characterized in that an aqueous solution of sodium hexacyanoferrate (II) is initially introduced into a reaction vessel at a pH value of 7.0 in a concentration of 45 ± 5 g/l, expressed as $Fe(CN)_6$, together with ammonium sulfate in a concentration of 14 ± 1 g/l at a temperature of 22 to 23°C, an aqueous iron(II) sulfate solution having a pH value of 2.0, a concentration of 100 ± 10 g/l and a temperature of 22 to 23°C is added and the white paste is precipitated up to an iron excess of 1.4 to 1.7 g/l, expressed as Fe in the filtrate, the white paste is then washed out by decantation until the filtrate indicates a conductivity of 5,000 to 5,500 μS and has an iron excess of 0.1 to 0.2 g/l, expressed as Fe in the filtrate 58 ± 6 g ammonium sulfate are then stirred in and the white paste is boiled for ≥ 2 hours, after which first ≥ 90 g HCl in the form of a 10 to 15% aqueous solution and then ≥ 51 g sodium chlorate in the form of an aqueous solution with a concentration of 270 ± 30 g/l are added at a temperature of 70 ± 5°C.

**Revendications**

1. Pigment bleu de fer, caractérisé par une teneur en ammonium ≥ 5,5 % en poids, une teneur en potassium < 0,1 % en poids, une teneur en sodium < 0,1 % en poids, un pouvoir colorant, dans une encre au toluène pour impression en creux, excédant jusqu'à 15 % celui du bleu Vossen 705/80 de référence (calculé selon DIN 53 234) et les écarts de couleur (déterminés selon DIN 6174, par rapport au bleu Vossen 705/80 en tant que référence) :

| $\Delta a^*$ | 6,5 ± 0,5 |
|---|---|
| $\Delta b^*$ | 1,3 ± 0,3 |
| $\Delta c^*$ | -1,5 ± 0,5. |

2. Procédé pour la préparation du pigment bleu de fer selon la revendication 1, caractérisé en ce que l'on dispose au préalable dans un récipient de réaction une solution aqueuse d'hexacyanoferrate (II) de sodium ayant un pH de 7,0 à une concentration de 45 ± 5 g/l, exprimée en $Fe(CN)_6$, conjointement avec du sulfate d'ammonium à une concentration de 14 + 1 g/l, à une température de 22 à 23°C, qu'on y ajoute une solution aqueuse de sulfate ferreux ayant un pH de 2,0, une concentration de 100 ± 10 g/l et à une température de 22-23°C et qu'on fait précipiter la pâte blanche jusqu'à un excès de fer de 1,4-1,7 g/l, exprimé en Fe dans le filtrat, ensuite qu'on extrait la pâte blanche par décantation jusqu'à ce que le filtrat présente une conductivité de 5000 à 5500 µS et présente un excès de fer de 0,1-0,2 g/l calculé en Fe dans le filtrat, qu'on y délaie ensuite 58 ± 6 g de sulfate d'ammonium et qu'on fait bouillir la pâte blanche pendant une durée de ≥ 2 heures et qu'on y ajoute ensuite, à une température de 70 ± 5°c d'abord ≥ 90 g de HCl sous forme d'une solution aqueuse à 10-15 %, et ensuite ≥ 51 g de chlorate de sodium sous forme d'une solution aqueuse ayant une concentration de 270 ± 30 g/l.